# EUROPÄISCHE PATENTSCHRIFT

(11) **EP 2 705 227 B1**
(45) Veröffentlichungstag und Bekanntmachung des Hinweises auf die Patenterteilung: **02.09.2015**
(21) Anmeldenummer: 11797191.1
(22) Anmeldetag: 09.12.2011
(51) Int. Cl.: F01N 3/023, F01N 3/30, F01N 9/00, F01N 3/20, F02D 41/02

(54) **BETRIEBSVERFAHREN FÜR EINEN KRAFTFAHRZEUG-DIESELMOTOR**
METHOD FOR OPERATING A MOTOR VEHICLE DIESEL ENGINE
PROCÉDÉ POUR FAIRE FONCTIONNER UN MOTEUR DIESEL DE VÉHICULE AUTOMOBILE

(30) Priorität: 06.05.2011 DE 102011100677
(43) Veröffentlichungstag der Anmeldung: 12.03.2014
(73) Patentinhaber: Daimler AG, 70327 Stuttgart (DE)
(72) Erfinder: BALTHES, Ortwin, 74343 Sachsenheim (DE); BECKMANN, Thomas, 70176 Stuttgart (DE); KEPPELER, Berthold, 73277 Owen (DE); MÜLLER, Siegfried, 74379 Ingersheim (DE)
(74) Vertreter: JENSEN & SON
(86) Internationale Anmeldenummer: PCT/EP2011/006216
(87) Internationale Veröffentlichungsnummer: WO 2012/152301

(56) Entgegenhaltungen:
- WO-A1-2010/094313
- DE-A1-102008 032 604
- FR-A1- 2 907 844
- US-A1- 2010 221 164

## Beschreibung

Die Erfindung betrifft ein Betriebsverfahren für einen Kraftfahrzeug-Dieselmotor mit einer Abgasreinigungsanlage umfassend einen Oxidationskatalysator, einen Partikelfilter und einen SCR-Katalysator, bei welchem das vom Dieselmotor abgegebene Abgas vor einem Durchleiten durch den Partikelfilter und den SCR-Katalysator durch den Oxidationskatalysator geleitet wird.

In der WO 99/39809 A1 ist eine für einen Dieselmotor vorgesehene Abgasreinigungsanlage beschrieben, welche hintereinander angeordnet einen Oxidationskatalysator, einen Partikelfilter und einen SCR-Katalysator aufweist.

Generell besteht ein Problem bei Abgasreinigungsanlagen mit Partikelfilter und SCR-Katalysator darin, dass bei Durchführung einer thermischen Partikelfilterregeneration mit Rußabbrand aufgrund der Betriebsbedingungen Stickoxide (NOx) überwiegend unkonvertiert an die Umgebung abgegeben werden. Solche Anlagen sind beispielsweise aus der WO2010/094313 A1 oder der FR2907844 auch bekannt. Aufgabe der Erfindung ist es, ein Betriebsverfahren für einen Kraftfahrzeug-Dieselmotor mit einer derartigen Abgasreinigungsanlage anzugeben, welches eine NOx-Verminderung auch bei Durchführung einer thermischen Partikelfilterregeneration mit Rußabbrand ermöglicht.

Diese Aufgabe wird durch ein Betriebsverfahren mit den Merkmalen des Anspruchs 1 gelöst.

Für das erfindungsgemäße Verfahren ist es charakteristisch, dass von Zeit zu Zeit eine Regeneration des Partikelfilters mit einem thermischen Rußabbrand vorgenommen wird, wobei während der Durchführung der Regeneration des Partikelfilters der Dieselmotor mit einem Luft-Kraftstoffverhältnis mit einem Lambdawert von wenigstens annähernd 1,0 betrieben wird und dem Abgas nach Austritt aus dem Oxidationskatalysator und vor dem Eintritt in den Partikelfilter Luft zugemischt wird, so dass ein Abbrennen von auf dem Partikelfilter abgelagertem Ruß ermöglicht ist.

Die Erfindung beruht auf der Erkenntnis, dass typischerweise eingesetzte Diesel-Oxidationskatalysatoren sowohl NOx als auch reduzierende Abgaskomponenten wie Kohlenmonoxid (CO) und Kohlenwasserstoffe (HC) auch bei hohen Abgastemperaturen in unschädliche Bestandteile umsetzen können, wenn der Dieselmotor mit einem Luft-Kraftstoffverhältnis mit einem λ-Wert von wenigstens annähernd 1,0 betrieben wird. Katalysatorformulierungen für Diesel-Oxidationskatalysatoren mit oder ohne eine Sauerstoffspeicherfähigkeit sind dem Fachmann bekannt, weshalb hier nicht speziell darauf eingegangen wird. Typisch sind jedenfalls beschichtete Trägerkatalysatoren, bei welchen ein Metall- oder Keramikträger mit einer edelmetallhaltigen washcoat-Beschichtung versehen ist. Bevorzugte Edelmetalle sind solche der Platingruppe, insbesondere Platin selbst.

Bei dem SCR-Katalysator handelt es sich um einen Katalysator, welcher NOx unter oxidierenden Bedingungen, d.h. bei λ > 1,0, mittels Ammoniak (NH₃) selektiv und kontinuierlich reduzieren kann.

In diesem Zusammenhang ist unter dem das Luft-Kraftstoffverhältnis charakterisierenden λ-Wert wie üblich ein Verhältnis von im Verbrennungsluft-Kraftstoffgemisch tatsächlich vorhandener Sauerstoffmenge zu der für eine vollständige Verbrennung des Kraftstoffes theoretisch mindestens erforderlichen Sauerstoffmenge zu verstehen. Ein mageres Luft-Kraftstoffgemisch mit einem Luftüberschuss weist daher einen λ-Wert von größer als eins auf. Ein fettes Luft-Kraftstoffgemisch mit einem Kraftstoffüberschuss weist hingegen einen λ-Wert von kleiner als eins auf. Bei Abwesenheit von Sauerstoff-Quellen oder -Senken im Abgassystem entspricht der λ-Wert im Abgas (Abgas- λ) dem λ-Wert des Luft-Kraftstoffgemisches (Verbrennungs- λ), mit welchem der Motor betrieben wird. Vereinfachend wird daher nachfolgend nur von einem λ-Wert oder kürzer λ gesprochen, wenn keine Differenzierung erforderlich ist.

Infolge der erfindungsgemäß vorgesehenen Zumischung von Luft zum Abgas vor dessen Eintritt in den Partikelfilter wird dieses mit Sauerstoff mehr oder weniger stark angereichert, sodass ein den Partikelfilter regenerierender Rußabbrand ablaufen kann, wobei eine vorherige Temperaturanhebung auf eine entsprechend hohe Temperatur vorausgesetzt wird. Typischerweise ist für einen thermischen Rußabbrand eine Temperatur des Abgases bzw. des Partikelfilters von mehr als 550 °C erforderlich. Eine üblicherweise angestrebte Abbrandgeschwindigkeit ist meist erst oberhalb 650 °C zu erzielen. Bei derart hohen Abgastemperaturen ist die Wirksamkeit eines in der Abgasreinigungsanlage ebenfalls vorgesehenen SCR-Katalysators in Bezug auf NOx-Umsatz bereits stark vermindert. Dies gilt insbesondere dann, wenn der SCR-Katalysator relativ nahe zum Partikelfilter angeordnet ist. Vorliegend kann jedoch der Oxidationskatalysator während der Partikelfilterregeneration diese Funktion übernehmen. Folglich ist auch während einer Partikelfilterregeneration eine Entfernung von NOx aus dem Abgas ermöglicht.

Als Partikelfilter kommt bevorzugt ein so genannter wallflow-Filter auf Basis Siliziumcarbid oder Aluminiumtitanat zum Einsatz, welcher optional eine katalytisch wirksame Beschichtung auf den Kanalwänden aufweisen kann.

Zur Zuführung von Luft ins Abgas zwischen Oxidationskatalysator und Partikelfilter kann eine Sekundärluftpumpe eingesetzt werden. Ebenfalls möglich ist eine Luftentnahme aus einem Druckluftspeicher oder eine Bereitstellung durch Abzweig aus einem Ansaugtrakt mittels eines Turboladers. Bevorzugt ist eine Vorrichtung zur variablen, insbesondere regelbaren Luftmengenbereitstellung.

In Ausgestaltung der Erfindung wird ein Oxidationskatalysator mit einer Drei-Wege-Katalysatorbeschichtung eingesetzt. Hierbei handelt es sich um ein Katalysatormaterial, welches in einem engen Bereich um λ = 1,0 eine Umsetzung sowohl von NOx, als auch von reduzierende Abgasbestandteile wie CO und HC zu unschädlichen Produkten katalysieren kann. Typischerweise enthält die Katalysatorbeschichtung Platin und/oder Palladium sowie Rhodium und ferner ein Material wie Ceroxid, welches Sauerstoff speichern und wieder abgeben kann. Entsprechende Katalysatorformulierungen sind dem Fachmann insbesondere aus Anwendungen betreffend die Abgasreinigung von Ottomotoren bekannt. Mit dieser Ausführung ist eine besonders wirksame Entfernung von schädlichen Abgasbestandteilen, insbesondere von NOx speziell bei der Durchführung einer Partikelfilterregeneration ermöglicht.

In weiterer Ausgestaltung des Verfahrens wird während einer Regeneration des Partikelfilters die Zumischung von Luft mit einem derartigen Mengenstrom vorgenommen, dass das Abbrennen von auf dem Partikelfilter (35) abgelagertem Ruß mit einer vorgebbaren Geschwindigkeit erfolgt. Die Rußabbrandgeschwindigkeit wird dabei bevorzugt mittels eines Temperatursensors ermittelt, welcher eine beim Rußabbrand freigesetzte Wärmemenge infolge der bewirkten Temperaturentwicklung direkt hinter und/oder in dem Partikelfilter erfassen kann. Da die Geschwindigkeit des Rußabbrands vom Sauerstoffpartialdruck des Abgases abhängt, kann der Rußabbrand über die zugemischte Luftmenge gesteuert bzw. geregelt werden. Auf diese Weise ist beispielsweise eine Überhitzung des Partikelfilters dadurch vermeidbar, dass die zugemischte Luftmenge und damit die Rußabbrenngeschwindigkeit reduziert bzw. niedrig gehalten werden. Eine mittels eines Lambdasensors geregelte oder gesteuerte Luftzufuhr zur Erzielung einer gewünschten Rußabbrennrate ist ebenfalls möglich. Da die Versorgung mit der einen Rußabbrand fördernden Luft aus einer externen Quelle erfolgt, ist ein von der Luftfördermenge unabhängiger Motorbetrieb ermöglicht.

In weiterer Ausgestaltung des Verfahrens wird außerhalb von Betriebsphasen einer Partikelfilterregeneration der Dieselmotor mit einem für normalen Dieselmotorbetrieb typischen Luftüberschuss betrieben und dem Abgas vor Durchleiten durch den SCR-Katalysator Ammoniak oder ein zur Abspaltung von Ammoniak befähigtes Reduktionsmittel, insbesondere eine wässrige Harnstofflösung zugemischt. Eine NOx-Reduktion erfolgt dabei mit Hilfe des SCR-Katalysators. Gleichzeitig ist eine Entfernung der oxidierbaren Abgasbestandteile mittels des Oxidationskatalysators ermöglicht.

In weiterer Ausgestaltung des Verfahrens wird das Abgas vor und/oder nach dem Durchleiten durch den Partikelfilter durch den SCR-Katalysator geleitet. Der SCR-Katalysator kann dabei als separates Bauteil vor und/oder hinter dem Partikelfilter vorgesehen sein. In einer besonders vorteilhaften weiteren Ausführungsform der Erfindung ist vorgesehen, dass das Abgas durch einen als Beschichtung des Partikelfilters ausgeführten SCR-Katalysator geleitet wird. Die Beschichtung des Partikelfilters mit einem SCR-Katalysatormaterial kann auf den Rohgasseiten oder den Reingasseiten der filterwirksamen Kanalwände des Partikelfilters vorgesehen sein. Bevorzugt ist es, die Reingasseite wenigstens am stromabwärtigen Teil des Partikelfilters mit einer Beschichtung mit einem SCR-Katalysatormaterial zu versehen.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegeben Kombination sondern auch in anderen Kombinationen oder in der Alleinstellung verwendbar, ohne den Rahmen der Erfindung zu verlassen.

Dabei zeigt die einzige Figur eine schematische Prinzipskizze eines Kraftfahrzeug-Dieselmotors mit einer daran angeschlossenen Abgasreinigungsanlage.

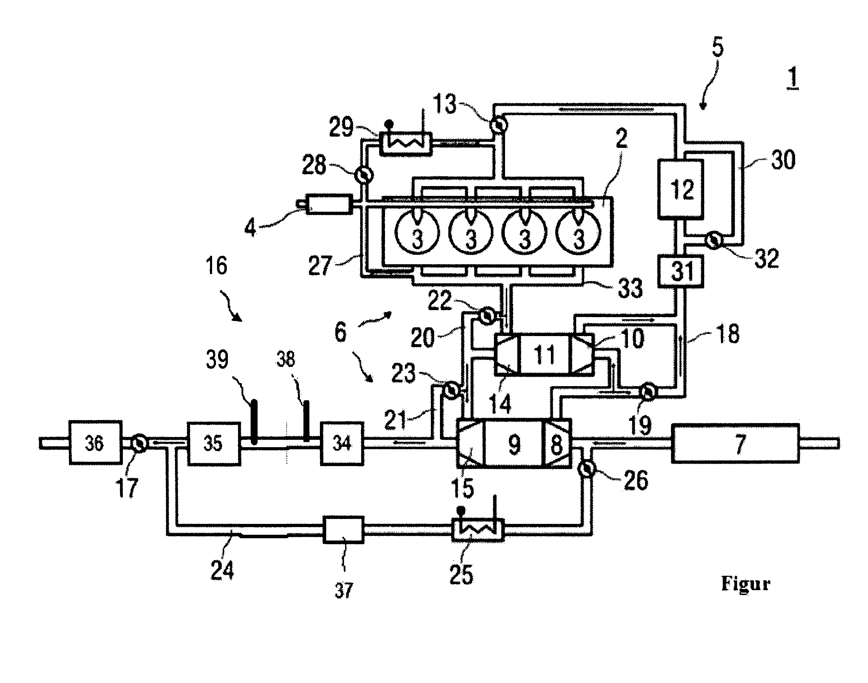

In Figur 1 ist lediglich schematisch eine vorteilhafte Ausführungsform eines Kraftfahrzeug-Dieselmotors 1 mit angeschlossener Abgasreinigungsanlage dargestellt, bei welchem das weiter unten näher erläuterte Verfahren zur Anwendung kommen kann. Der Dieselmotor 1 weist vorliegend eine zweistufige Aufladung und eine zweistufige Abgasrückführung auf und umfasst einen Motorblock 2 mit Arbeitszylindern 3 mit nicht näher gekennzeichneten Brennräumen, wobei den Arbeitszylindern 3 bzw. deren jeweiligem Brennraum mittels einer Hochdruckpumpe 4 Kraftstoff zuführbar ist. Über ein Luftzufuhrsystem 5 kann den Arbeitszylindern 3 bzw. deren jeweiligem Brennraum Verbrennungsluft zugeführt werden und über einen Abgastrakt 6 wird Abgas aus den Arbeitszylindern 3 abgeführt. Im Luftzufuhrsystem 5 sind ein Luftfilter 7, ein erster Verdichter 10 eines als Hochdruck-Abgasturbolader 11 ausgebildeten ersten Abgasturboladers, ein zweiter Verdichter 8 eines als Niederdruck-Abgasturbolader 9 ausgebildeten zweiten Abgasturboladers, ein Ladeluftkühler 12 und eine Drosselklappe 13 angeordnet.

Im Abgastrakt 6 sind ausgehend vom Motorblock 2 in Strömungsrichtung des Abgases eine dem Hochdruck-Abgasturbolader 11 zugeordnete erste Turbine 14, eine dem Niederdruck-Abgasturbolader 9 zugeordnete zweite Turbine 15 und eine Abgasreinigungsanlage 16 angeordnet. Die Abgasreinigungsanlage 16 weist vorliegend einen Partikelfilter 35 zur Ausfilterung von Partikeln aus dem Abgas sowie einen vorgeschalteten Oxidationskatalysator 34 auf. Ferner kann ein nicht dargestelltes insbesondere elektrisches Heizelement vorgesehen sein, um die Abgasreinigungsanlage 16 rasch auf eine erforderliche Betriebstemperatur oder auf eine erhöhte Temperatur zu bringen. Vorzugsweise ist das Heizelement unmittelbar vor dem Oxidationskatalysator 34 angeordnet. Der Oxidationskatalysator 34 ist bevorzugt als so genannter Diesel-Oxidationskatalysator mit einer Beschichtung mit einer Drei-Wege-Katalysator-Funktion, insbesondere mit Metall-folien-Trägerkörper ausgebildet. Wenn vorhanden, ist auch das elektrische Heizelement bevorzugt als beschichteter Metallfolien-Trägerkörper (so genannter E-Kat) ausgebildet.

Der Partikelfilter 35 kann in Sintermetallausführung oder als wanddurchströmte Filtereinheit in Wabenkörperbauweise ausgebildet sein. Vorzugsweise ist für den Partikelfilter 35 eine katalytische Beschichtung, beispielsweise mit einem oxidationskatalytisch wirksamen Material und/oder mit einem SCR-Katalysatormaterial vorgesehen. Das SCR-Katalysatormaterial kann unter oxidierenden Bedingungen eine selektive, kontinuierliche Reduktion von NOx mittels eingespeichertem und/oder zugeführtem Ammoniak (NH₃) als selektivem NOx-Reduktionsmittel katalysieren. Bevorzugt als Katalysatormaterial ist ein Eisen oder Kupfer enthaltender Zeolith. Das SCR-Katalysatormaterial kann dabei auf der Rohgasseite und/oder auf der Reingasseite der filterwirksamen Flächen des Partikelfilters 35 vorgesehen sein. Bei der bevorzugten Ausführung des Partikelfilters 35 als üblicher wanddurchströmter Filter in Wabenkörperbauweise ist die Beschichtung mit dem entsprechenden SCR-Katalysatormaterial bevorzugt auf den rohgasexponierten Kanalwänden vorgesehen. Insbesondere in diesem Fall kann es vorteilhaft sein, die SCR-Katalysatorbeschichtung lediglich abschnittsweise eintrittsseitig oder austrittsseitig auf Kanalwänden des Partikelfilters 35 vorzusehen. Beispielsweise kann über einen ersten Teil der axialen Ausdehnung des Partikelfilters 35 von etwa 50 % der Länge eine Beschichtung mit dem SCR-Katalysatormaterial vorgesehen sein. Der in axialer Richtung gesehen hintere Teil kann unbeschichtet oder mit einer oxidationskatalytisch wirksamen Beschichtung versehen sein.

Zur Anreicherung des Abgases mit Ammoniak ist zwischen dem Oxidationskatalysator 34 und dem Partikelfilter 35 eine Zugabevorrichtung 38 vorgesehen, welche Ammoniak oder ein zur Abspaltung von Ammoniak befähigtes Reduktionsmittel wie beispielsweise Harnstoff-Wasserlösung, in den Abgastrakt 6 eindüsen kann. Zur Verbesserung einer Gleichverteilung kann ein nicht gesondert dargestellter nachgeschalteter Mischer im Abgastrakt 6 angeordnet sein.

Weiter ist vorliegend stromab des Partikelfilters 35 eine SCR-Katalysatoreinheit 36 im Abgastrakt 6 angeordnet. Diese ist analog zur SCR-Katalysatormaterialbeschichtung des Partikelfilters 35 zur selektiven Reduktion von NOx mit NH₃ befähigt. Vorzugsweise ist die SCR-Katalysatoreinheit 36 motorfern im Unterbodenbereich des Fahrzeugs, insbesondere in einem Endschalldämpfer angeordnet. Besonders bevorzugt ist jedenfalls eine Anordnung im Abgasstrang 6 derart, dass bei einer thermischen Partikelfilterregeneration deren Temperatur nicht über 550 °C ansteigt. Durch geometrische Entfernung vom Partikelfilter 35 in Verbindung mit einer entsprechenden Dimensionierung des Abgastrakts 6 in Bezug auf Wärmeabgabe kann erreicht werden, dass zwischen einem auf etwa 800 °C aufgeheizten Partikelfilter 35 und der SCR-Katalysatoreinheit 36 ein Temperaturgefälle von mehr als 250 °C besteht.

Die SCR-Katalysatoreinheit 36 ist bevorzugt als monolithisches Abgasreinigungsbauteil in Wabenkörperform mit einer entsprechenden Beschichtung ausgebildet. Bevorzugt ist ebenfalls eine zeolithische Beschichtung auf Kupfer- oder Eisenbasis. Die SCR-Katalysatoreinheit 36 kann jedoch auch als Vollextrudat-Wabenkörper, beispielsweise auf der Basis von Vanadiumpentoxid/Titanoxid/Wolframoxid ausgebildet sein. Es ist besonders bevorzugt, wenn die SCR-Katalysatoreinheit 36 im Vergleich zum SCR-Katalysatormaterial der Partikelfilterbeschichtung einen anderen, insbesondere niedrigeren Temperaturbereich der katalytischen Wirksamkeit aufweist. Weiterhin ist eine Ausführungsform mit vergleichsweise großer Speicherfähigkeit für NH₃ bevorzugt. Um eine Abgabe von NH₃ an die Umgebung, beispielsweise infolge einer thermischen Desorption oder infolge von beladungsbedingtem Schlupf zu verhindern, kann stromab von der SCR-Katalysatoreinheit 36 ein weiterer Oxidationskatalysator als so genannter Sperr-Katalysator vorgesehen sein, was nicht gesondert dargestellt ist.

Weiterhin ist zwischen dem Oxidationskatalysator 34 und dem Partikelfilter 35 eine Sekundärluft-Zugabevorrichtung 39 angeordnet, welche bedarfsweise und mengenvariabel Luft in den Abgastrakt 6 einblasen kann. Obschon vorliegend stromab der Zugabevorrichtung 38 eingezeichnet, kann die Sekundärluft-Zugabevorrichtung 39 auch stromauf davon angeordnet oder baulich integriert in die Zugabevorrichtung 38 sein. Dies ermöglicht eine druckluftunterstützte Verwirbelung und Verteilung von durch die Zugabevorrichtung 38 dem Abgas zugeführter Harnstofflösung. Die Sekundärluft-Zugabevorrichtung 39 kann an eine Pumpe oder ein Druckluftreservoir angeschlossen sein.

Stromab des zweiten Verdichters 8 zweigt ein den Hochdruck-Abgasturbolader 11 umgehender Verdichterbypass 18 ab, in welchem ein Verdichterbypassventil 19 angeordnet ist, so dass mittels des zweiten Verdichters 8 komprimierte Frischluft bzw. ein Frischluft-Abgasgemisch, abhängig von einem Betriebszustand des Motors 1 und einer daraus resultierenden Stellung des Verdichterbypassventils 19 den ersten Verdichter 10 in mehr oder weniger großem Umfang passieren kann. Auf diese Weise ist ein Ladedruck des Motors 1 regelbar bzw. bei niedrigen Drehzahlen des Motors 1, bei welchen der Hochdruck-Abgasturbolader 11 aufgrund eines zu geringen Abgasdrucks noch nicht betreibbar ist, der erste Verdichter 10 über den Verdichterbypass 18 umgehbar.

Im Abgastrakt 6 sind ebenfalls Bypässe 20, 21 angeordnet, welche jeweils eine Turbine 14, 15 umgehen, nämlich ein erster Turbinenbypass 20, in welchem ein erstes Turbinenbypassventil 22 angeordnet ist und ein zweiter Turbinenbypass 21, in welchem ein zweites Turbinenbypassventil 23 angeordnet ist. Bei niedrigen Drehzahlen des Motors 1 und daraus folgend einem niedrigen Abgasdruck ist der Hochdruck-Abgasturbolader 11 noch nicht betreibbar, daher ist in diesem Betriebszustand das erste Turbinenbypassventil 22 derart ansteuerbar, dass ein Abgasmassenstrom über den ersten Turbinenbypass 20 an der ersten Turbine 14 vorbei leitbar ist und so vollständig zum Antrieb der zweiten Turbine 15 des Niederdruck-Abgasturboladers 9 nutzbar ist.

Bei sehr hohen Drehzahlen des Motors 1 ist der auf die Turbinen 14, 15 der Abgasturbolader 9, 11 einwirkende Abgasdruck hoch, wodurch diese hohe Drehzahlen erreichen. Daraus folgt eine hohe Verdichterleistung der Verdichter 8, 10 der Abgasturbolader 9, 11 und dadurch ein hoher Ladedruck des Frischluft-Abgasgemisches. Dieser darf jedoch einen vorgegebenen Wert nicht überschreiten, so dass bei Erreichen dieses vorgegebenen Wertes ein oder beide Turbinenbypässe 20, 21 als so genanntes Wastegate nutzbar sind. Dabei sind die Turbinenbypassventile 22, 23 derart ansteuerbar, dass sie beispielsweise teilweise öffnen, wodurch ein Teil des Abgasmassenstroms an den Turbinen 14, 15 vorbei leitbar und dadurch der auf die Turbinen 14, 15 einwirkende und diese antreibende Abgasdruck verringerbar ist. Daraus resultiert eine geringere Kompression des durch die Verdichter 8, 10 der Abgasturbolader 9, 11 verdichteten Gases, d. h. ein geringerer Ladedruck.

Mittels dieser Anordnung des Niederdruck-Abgasturboladers 9 und des Hochdruck-Abgasturboladers 11 ist eine Leistung des Motors 1 in unterschiedlichen Drehzahlbereichen optimierbar und ein jeweils optimaler Ladedruck bereitstellbar. Dadurch ist insbesondere ein so genanntes Turboloch, d. h. ein fehlender oder geringer Ladedruck und daraus resultierend eine geringe Leistung eines derartigen Motors 1 in niedrigen Drehzahlbereichen verhinderbar oder dieses Problem zumindest deutlich reduzierbar und damit beispielsweise ein Fahrverhalten und ein Treibstoffverbrauch eines durch diesen Motor 1 angetriebenen Fahrzeugs optimierbar.

Stromab des Partikelfilters 35 und, d. h. auf einer Niederdruckseite des Abgastrakts 6, zweigt vom Abgastrakt 6 eine Niederdruck-Abgasrückführungs-(AGR)-Leitung 24 ab, die stromauf des zweiten Verdichters 8 des Niederdruck-Abgasturboladers 9 und stromab des Luftfilters 7 wieder in das Luftzufuhrsystem 5 mündet. Mittels einer im Abgastrakt 6 angeordneten Abgasaufstauklappe 17 ist die Menge bzw. der Anteil von über die Niederdruck-Abgasrückführleitung 24 rückgeführtem Abgas beeinflussbar. Stromab von der Aufstauklappe 17 und stromauf von der SCR-Katalysatoreinheit 36 kann eine zweite Zugabevorrichtung für ein Ammoniak in freier oder gebundener Form enthaltendes Reduktionsmittel vorgesehen sein, was nicht gesondert dargestellt ist. Auf diese Weise ist eine an die jeweiligen Betriebsbedingungen und die jeweilige Wirksamkeit von SCR-Katalysatorbeschichtung des Partikelfilters 35 und SCR-Katalysatoreinheit 36 angepasste und bevorzugt getrennt einstellbare Versorgung mit Ammoniak ermöglicht. Obschon vorliegend hinter der Abzweigestelle der Niederdruck-Abgasrückführleitung 24 angeordnet dargestellt, kann die Abgasaufstauklappe 17 auch hinter dem SCR-Katalysator 36 angeordnet sein.

In der Niederdruck-AGR-Leitung 24 ist stromab von der Abzweigung vom Abgastrakt 6 in Strömungsrichtung eines Niederdruck-AGR-Massenstroms gesehen ein NiederdruckAGR-Kühler 25 und ein Niederdruck-AGR-Ventil 26 angeordnet. Optional kann die Kühlung des Niederdruck-AGR-Massenstroms unter Entfall des Niederdruck-AGR-Kühlers 25 über die verwendeten Rohrlängen oder Rohrgestaltungen erfolgen. Die Kühlung des Niederdruck-AGR-Massenstroms stellt sicher, dass an den Verdichtern 8, 10 im Abgasrückführungsbetrieb keine unzulässig hohen Temperaturen auftreten.

In der Niederdruck-AGR-Leitung 24 kann stromauf des Niederdruck-AGR-Kühlers 25 ein weiterer SCR-Katalysator 37 vorgesehen sein. Dieser ermöglicht eine Verminderung von im rückgeführten Abgas gegebenenfalls vorhandenem Stickoxid und/oder Ammoniak bzw. Sauerstoff. Dadurch werden wiederum Ablagerungen und Korrosionserscheinungen vermieden oder vermindert und es ist ein verbesserter Ablauf der in den Brennräumen des Motors 1 erfolgenden Kraftstoffverbrennung ermöglicht. Der weitere SCR-Katalysator 37 kann darüber hinaus eine Filterfunktion übernehmen, so dass zumindest vergleichsweise grobe Partikel aus dem über den Niederdruckpfad rückgeführten Abgas entfernt werden. Ferner können stromauf und/oder stromab des Oxidationskatalysators 34 bzw. des Partikelfilters 35 ein oder mehrere weitere reinigungswirksame Abgasnachbehandlungskomponenten, wie beispielsweise ein weiterer Oxidationskatalysator, ein SCR-Katalysator und/oder ein Stickoxid-Speicherkatalysator im Abgastrakt 6 angeordnet sein, was nicht gesondert dargestellt ist. Insbesondere ist es bevorzugt, wenn stromab der SCR-Katalysatoreinheit 36 eine oxidationskatalytisch wirksame Abgasreinigungskomponente angeordnet ist, mittels welcher ein Ammoniakschlupf aus dem Abgas entfernt werden kann.

Stromauf der Turbine 14 des Hochdruck-Abgasturboladers 11, d. h. auf einer Hochdruckseite des Abgastrakts 6, zweigt von einem Abgaskrümmer 33 des Abgastrakts 6 eine Hochdruck-AGR-Leitung 27 ab, die stromab der Drosselklappe 13 in das Luftzufuhrsystem 5 mündet. Mittels dieser Hochdruck-AGR-Leitung 27 ist ein Hochdruck-AGR-Massenstrom über ein Hochdruck-AGR-Ventil 28 in das Luftzufuhrsystem 5 leitbar. In der dargestellten Ausführungsform ist in der Hochdruck-AGR-Leitung 27 ein Hochdruck-AGR-Kühler 29 angeordnet, welcher gegebenenfalls mit dem Niederdruck-AGR-Kühler 25 baulich und/oder funktionell vereinigt sein kann. Optional kann jedoch eine Kühlung des Hochdruck-AGR-Massenstroms beispielsweise auch über eine Rohrlänge der Hochdruck-AGR-Leitung 27 erfolgen. Für den Niederdruck-AGR-Kühler 25 und/oder den Hochdruck-AGR-Kühler 29 können Umgehungsleitungen, insbesondere mit Einstellmitteln zur variablen Durchsatzeinstellung vorgesehen sein, was nicht gesondert dargestellt ist.

Der dargestellte Dieselmotor 1 weist somit eine Abgasrückführung auf, bei der Abgas stromauf der Turbine 14 des Hochdruck-Abgasturboladers 11 über einen entsprechenden Hochdruckpfad sowie stromab der Abgasreinigungseinheit 16 über einen entsprechenden Niederdruckpfad dem Abgastrakt 6 entnehmbar ist und, gegebenenfalls nach Abkühlung, stromauf des Verdichters 8 des Niederdruck-Abgasturboladers 9 sowie stromab der Drosselklappe 13 des Luftzufuhrsystems 5 und damit den Brennräumen 3 zuführbar ist. Der Motor 1 ist dabei wahlweise ohne Abgasrückführung, mit Hochdruck-Abgasrückführung oder Niederdruck-Abgasrückführung oder gleichzeitig mit Hochdruck-Abgasrückführung und Niederdruck-Abgasrückführung mit jeweils variablen Abgasrückführmengen betreibbar. Somit ist den Brennräumen 3 ein Verbrennungsgas mit einer in weiten Grenzen veränderbaren Abgasrückführrate mit variablem Niederdruckanteil und variablem Hochdruckanteil zuführbar. Eine Einstellung einer Abgasrückführungsmenge, d. h. des rückgeführten Abgasmassenstromes und damit der AGR-Rate, erfolgt mittels der Abgasaufstauklappe 17 und/oder des Niederdruck-AGR-Ventils 26 sowie mittels des Hochdruck-AGR-Ventils 28 als Einstellmitteln, womit der Niederdruckanteil sowie der Hochdruckanteil des insgesamt rückgeführten Abgases ebenfalls in weiten Grenzen einstellbar sind. Dies erzielt insgesamt saubere Abgasrückführungsmassenströme, eine bessere Abkühlung der Abgasrückführungsmassenströme, vermeidet Versottung der Abgasrückführungskühler 25, 29 und ermöglicht eine gute Durchmischung der Abgasrückführungsmassenströme mit Frischluft im Luftzufuhrsystem 5. Es sind hohe Abgasrückführungsraten möglich und es ist ein homogener oder zumindest teilhomogener Betrieb der Brennkraftmaschine 1 möglich.

Die Abgasaufstauklappe 17 und das Niederdruck-AGR-Ventil 26 sind vorliegend Stellglieder einer als Vorsteuerregelung ausgeführten Abgasrückführungsregelung. Sowohl das Niederdruck-AGR-Ventil 26 wie auch die Abgasaufstauklappe 17 sind vorzugsweise kontinuierlich verstellbar. Mit Hilfe der Abgasaufstauklappe 17 und des Niederdruck-AGR-Ventils 26 vor dem Verdichter 8 ist der Niederdruckanteil am gesamten Abgasrückführungsmassenstrom einstellbar und letzterer somit ebenfalls beeinflussbar. Solange ein ausreichendes Druckgefälle zur Förderung des Niederdruck-Abgasrückführungsmassenstroms vorhanden ist, ist dieser zunächst ausschließlich über das Niederdruck-AGR-Ventil 26 einstellbar. Ist dies nicht mehr der Fall, ist zusätzlich die Abgasaufstauklappe 17 etwas anstellbar, um das Druckgefälle über das Niederdruck-AGR-Ventil 26 zu erhöhen. Dabei ist eine sehr gute Durchmischung des Niederdruck-Abbgasrückführungsmassenstroms mit der Frischluft sichergestellt. Ein weiterer Vorteil besteht unter anderem darin, dass das über den Niederdruckpfad rückgeführte Abgas sauber und nahezu pulsationsfrei ist. Zusätzlich steht eine erhöhte Verdichterleistung zur Verfügung, da bei einem hohen Niederdruckanteil rückgeführten Abgases ein vergleichsweise hoher Abgasmassenstrom durch die Turbinen 14, 15 leitbar ist. Da das rückgeführte Abgas nach den Verdichtern 8, 10 durch den leistungsfähigen Ladeluftkühler 12 leitbar ist, kann die Temperatur des Frischluft und Abgas umfassenden Verbrennungsgases auch relativ kalt gehalten werden. Die Brennkraftmaschine 1 ist je nach Bedarf sowohl mit der Hochdruck-Abgasrückführung als auch mit der Niederdruck-Abgasrückführung oder mit beiden betreibbar.

Mittels eines vorzugsweise vorgesehenen, den Ladeluftkühler 12 umgehenden Ladeluftkühlerbypasses 30 im Luftzufuhrsystem 5, ist eine Versottung des Ladeluftkühlers 12 vermeidbar. Die Gefahr einer so genannten Versottung besteht beispielsweise, wenn ein Wasserdampf und gegebenenfalls Partikel enthaltendes Gasgemisch im Ladeluftkühler 12 unter den Taupunkt abgekühlt wird und Kondensatbildung eintritt.

Vorzugsweise ist vorgesehen, dass das gesamte Frischluft-Abgasgemisch oder auch nur ein Teil davon über den Ladeluftkühlerbypass 30, welcher stromauf des Ladeluftkühlers 12 abzweigt, an dem Ladeluftkühler 12 vorbei geleitet werden kann, wodurch es durch den Ladeluftkühler 12 nicht kühlbar ist und daher die Temperatur nicht unter den Taupunkt abfällt. Um sicherzustellen, dass das Frischluft-Abgasgemisch, wenn nötig, d.h. bei hohen Temperaturen des Frischluft-Abgasgemisches, weiterhin mittels des Ladeluftkühlers 12 effektiv kühlbar ist, ist stromab der Verdichter 8, 10 und stromauf des Ladeluftkühlers 12 im Luftzufuhrsystem 5 ein Temperatursensor 31 angeordnet, so dass bei Erreichen einer vorgegebenen Temperatur ein im Ladeluftkühlerbypass 30 angeordnetes Ladeluftkühlerbypassventil 32 entsprechend ansteuerbar ist und daraufhin dieses Ladeluftkühlerbypassventil 32 beispielsweise vollständig öffnet oder vollständig schließt oder in einer weiteren Ausführungsform teilweise öffnet.

Für einen optimalen Betrieb des Motors 1 und des Abgasnachbehandlungssystems 16 sind vorzugsweise weitere Sensoren im Abgastrakt 6 sowie im Luftzufuhrsystem 5 vorgesehen, was der Übersichtlichkeit halber nicht näher dargestellt ist. Es können Temperatur- und/oder Drucksensoren ausgangsseitig des Abgaskrümmers 33, in den Turbinenbypässen 20, 21, eingangs- und/oder ausgangsseitig oder innerhalb der vorzugsweise als kompakte Einheit ausgebildeten Kombination von Oxidationskatalysator 34 und Partikelfilter 35 Abgasreinigungsmoduls, eingangs- und/oder ausgangsseitig des SCR-Katalysators 36, eingangs- und/oder ausgangsseitig des Luftfilters 7, eingangs- und ausgangsseitig der Verdichter 8, 10, in den Abgasrückführungsleitungen 24, 27 und gegebenenfalls an weiteren Stellen angeordnet sein, um die Temperatur- und Druckverhältnisse zu erfassen. Vorzugsweise ist ferner ein Luftmassenstromsensor stromab des Luftfilters 7 vorgesehen, um den Frischluftmassenstrom zu erfassen. Weiterhin sind vorzugsweise Abgassensoren im Abgastrakt 6, wie beispielsweise eine Lambdasonde im Abgaskrümmer 33 und vor und/oder nach dem Oxidationskatalysator 34 bzw. dem Partikelfilter 35 angeordnet, vorgesehen.

Die Signale der vorhandenen Sensoren sind von einem nicht dargestellten Steuergerät verarbeitbar, welches anhand der Signale und gespeicherten Kennlinien und Kennfelder Betriebszustände des Motors 1 allgemein, insbesondere im Abgastrakt 6 und im Luftzufuhrsystem 5 ermitteln und durch Ansteuerung von Stellgliedern gesteuert und/oder geregelt einstellen kann. Insbesondere sind Abgasrückführmassenströme im Nieder- und Hochdruckpfad sowie ein Lastzustand des Motors 1 in Bezug auf Drehmoment bzw. Mitteldruck sowie Drehzahl ermittel- bzw. einstellbar. Weiterhin sind Kraftstoffeinspritzparameter wie Anzahl der Kraftstoffeinspritzungen je Arbeitszyklus sowie deren Einspritzdruck, -Dauer und -Zeitpunkt einstellbar.

Nachfolgend wird der Betrieb des Motors 1 bzw. der Abgasreinigungsanlage 16 näher erläutert.

Bei normalen Betriebsbedingungen, d.h. bei warmgelaufenem Motor 1 und betriebsfähiger Abgasreinigungsanlage 16 wird der Motor 1 mit einem für normalen dieselmotorischen Betrieb typischen Luftüberschuss betrieben. Eine Entfernung der oxidierbaren Schadstoffe CO und HC im Abgas erfolgt überwiegend mittels des Oxidationskatalysators 34. Im Abgas enthaltene Partikel werden durch den Partikelfilter 35 ausgefiltert und im Abgas enthaltene Stickoxide werden durch die SCR-Katalysatorbeschichtung des Partikelfilters 35 und/oder durch die SCR-Katalysatoreinheit 36 entfernt.

Bezüglich der Stickoxidentfernung erfolgt eine gesteuerte oder geregelte Einstellung einer Dosierrate für die Zugabe des Reduktionsmittels durch die Zugabevorrichtung 38 und/oder die weitere Zugabevorrichtung bevorzugt orientiert an einem Wirkungsgrad der SCR-Katalysatorbeschichtung bzw. der SCR-Katalysatoreinheit 36 in Bezug auf einen aktuellen Umsatz von Stickoxiden. Die Dosierrateneinstellung kann dabei modellbasiert unter Zurhilfenahme eines Rechenmodells bzw. anhand vorgehaltener Kennlinien und/oder Kennfelder in Abhängigkeit von aktuellen Werten vorgebbarer Betriebsgrößen des Motors 1 und/oder der Abgasreinigungsanlage 16 derart erfolgen, dass eine Stickoxidverminderungsrate einen vorgebbaren Sollwert wenigstens annähernd erreicht. Dabei werden vorzugsweise Daten betreffend eine Stickoxid-Rohemission des Motors 1 und von Stickoxidsensoren hinter dem Partikelfilter 35 bzw. der Katalysatoreinheit 36 ausgewertet. Abweichungen vom Sollwert werden durch eine gegensteuernde Änderung der Dosierrate weitestgehend ausgeglichen.

Was die Funktion des Partikelfilters 35 betrifft, so ist vorgesehen, dessen Rußbeladung laufend zu überwachen. Hierfür wird bevorzugt ein messtechnisch ermittelter Differenzdruck über dem Partikelfilter 35 unter Berücksichtigung von Abgasmassenstrom und Abgastemperatur durch eine Beladungsmodell ausgewertet und dadurch ein Schätzwert für die Rußbeladung ermittelt. Überschreitet die Rußbeladung einen vorgebbaren Grenzwert, so wird eine thermische Regeneration des Partikelfilters 35 angefordert. Falls vorgebbare Kriterien betreffend eine Durchführbarkeit einer Partikelfilterregeneration erfüllt sind, so wird der Normalbetrieb des Motors 1 unterbrochen und in einen Sonderbetrieb umgeschaltet. Die für einen Rußabbrand erforderliche erhöhte Temperatur von ca. 550 °C bis 700 °C eingangsseitig des Partikelfilters 35 wird durch Umstellung der Verbrennungsparameter des Motors 1 und durch Freisetzung von Wärmeenergie am Oxidationskatalysator 34 erreicht.

Infolge der erhöhten Temperatur des Partikelfilters 35 bzw. des Abgastrakts 6 insgesamt ist die Wirksamkeit der SCR-Katalysatorbeschichtung des Partikelfilters 35 bzw. der SCR-Katalysatoreinheit 36 typischerweise stark vermindert. Um dennoch eine Stickoxidverminderung zu erzielen, wird der Motor 1 während der Partikelfilterregeneration mit einem Luft-Kraftstoffverhältnis mit einem Lambdawert von wenigstens annähernd λ = 1,0 betrieben. Mit einem Verbrennungs-λ von annähernd 1,0 liegt auch ein Abgas-λ von annähernd 1,0 vor und eine Stickoxidverminderung sowie auch eine Verminderung von oxidierbaren Abgasbestandteilen kann durch den Oxidationskatalysator 34 mit hoher Wirksamkeit erfolgen. Vorzugsweise erfolgt ein Übergang zu einem Motorbetrieb mit λ ca. 1,0 wenn festgestellt wird, dass eine Endrohremission von Stickoxiden ein vorgebbares Ausmaß überschreitet. Eine Zufuhr von Ammoniak ist für eine Stickoxidverminderung dann weder erforderlich noch nützlich und wird daher beendet bzw. unterbrochen.

Zur Einstellung eines Verbrennungs-λ mit einem Zielwert von etwa 1,0 wird bevorzugt zunächst ein Vorsteuerwert für das Luft-Kraftstoffverhältnis im Bereich zwischen λ = 1,10 und λ = 1,15 eingestellt. Hierfür werden die Luftzufuhrmenge und Abgasrückführmenge auf betriebspunktabhängige Vorsteuerwerte durch Betätigung der Drosselklappe 13, Stellmittel für die Abgasturbolader 9, 11 sowie die AGR-Ventile 26, 28 eingestellt und die für den λ-Vorsteuerwert erforderliche Kraftstoffmenge über die Summe aus Kraftstoff-Voreinspritzung, -Haupteinspritzung und angelagerter Nacheinspritzung eingestellt. Typischerweise wird die Drosselklappe auf Werte zwischen 70 % und 95 %, eine Ladedruckklappe auf Werte zwischen 5 % bis 45 % und ein Wastegate auf Werte zwischen 25 % und 45 % geschlossen. Bevorzugt wird das Hochdruck-AGR-Ventil 28 ganz geschlossen und die Abgasrückführmenge durch Betätigung des Niederdruck-Abgasrückführventils 26 und der Abgasaufstauklappe 17 eingestellt. Durch Absetzung einer berechneten Vorsteuer-Menge einer späten, nicht drehmomentwirksamen Kraftstoff-Nacheinspritzung bei einem Kurbelwinkel von > 80° nOT erfolgt eine Anfettung zur Erreichung des λ-Zielwerts. Dessen genauer Wert wird durch Verarbeitung eines sensorisch vorzugsweise unmittelbar hinter dem Oxidationskatalysator 34 erfassten Werts für den Sauerstoffgehalt des Abgases und Nachjustierung der Nacheinspritzmenge eingestellt. Dabei ist es bevorzugt, einen innerhalb eines vorgebbaren Zielbereichs oszillierenden λ-Wert geregelt einzustellen. Vorzugsweise ist der λ-Zielbereich durch eine untere Grenze von λ = 0,95 bis λ = 0,98 und eine obere Grenze von λ = 1,0 bis λ = 1,05 vorgegeben. Eine bevorzugte Oszillationsfrequenz liegt zwischen 1 und 5 Hz. Wie sich gezeigt hat, ist durch diese Einstellungen ein besonders hoher Umsatz des Oxidationskatalysators 34 sowohl in Bezug auf CO und HC als auch auf NOx ermöglicht.

Mit den vorzugsweise vorgenommenen Einstellungen zur Erzielung eines Abgas-λ von annähernd 1,0 liegt eingangsseitig des Partikelfilters 35 ein nahezu sauerstofffreies Abgas vor, welches keinen Rußabbrand ermöglicht. Zur Einstellung des hierfür erforderlichen Sauerstoffgehalts wird erfindungsgemäß die Sekundärluft-Zugabevorrichtung 39 betätigt und das Abgas vor dem Partikelfilter 35 mit Sauerstoff angereichert. Dabei ist es vorzugsweise vorgesehen, die Sekundärluftzufuhr insbesondere geregelt derart einzustellen, dass eine vorgebbare Rußabbrenngeschwindigkeit resultiert. Als Regelgröße hierfür kann eine Abgastemperaturdifferenz über dem Partikelfilter 35 herangezogen werden, welche beispielsweise mittels eingangsseitig und ausgangsseitig angeordneten Temperaturfühlern ermittelbar ist. Auf diese Weise ist einerseits die Dauer einer Partikelfilterregeneration verringerbar, andererseits kann vermieden werden, dass der Partikelfilter 35 durch Überhitzung infolge einer zu hohen Rußabbrennrate beschädigt wird.

Nach abgeschlossener Partikelfilterregeneration oder bei Vorliegen einer anderweitig erzeugten Anforderung zu deren Beendigung, wird im Wesentlichen zu den Einstellungen vor deren Beginn zurückgekehrt. D.h. dass die Sekundärluft-Zugabevorrichtung 39 ausgeschaltet, der Motor 1 wieder normal mit dem für Dieselmotor typischen Luftüberschuss betrieben und die bedarfsgerechte Zugabe des Stickoxid-Reduktionsmittels wieder aufgenommen werden.

Die infolge des beschriebenen stöchiometrischen Motorbetriebs erzielte Verminderung der NOx-Freisetzung an die Umgebung während den von Zeit zu Zeit durchzuführenden thermischen Partikelfilterregenerationen kann durch begleitende Maßnahmen noch verbessert werden. Hierzu gehört bevorzugt eine Verminderung der NOx-Rohemission des Motors 1 speziell während der Partikelfilterregeneration, was vorzugsweise durch Einstellung einer insbesondere bis zum vorgesehenen Maximalwert erhöhten Niederdruck-AGR-Rate erreicht wird. Bevorzugt wird die Hochdruck-AGR-Rate zugunsten der Niederdruck-AGR-Rate auf Null reduziert.

Generell angestrebt ist in diesen Zusammenhang eine Minimierung der Anzahl bzw. Häufigkeit von Partikelfilterregenerationen. Hierfür kann eine Anhebung der NOx-Rohemission des Motors 1 bei Normalbetrieb, insbesondere bei Temperaturen von um oder über 300 °C des Partikelfilters 35 vorgesehen sein. Infolge Oxidation am Oxidationskatalysator 34 wird vermehrt Stickstoffdioxid (NO₂) angeboten, welches eine Rußoxidation bzw. kontinuierliche Partikelfilterregeneration (CRT-Effekt) bewirkt. Damit vermindert sich die Rußbeladungsrate des Partikelfilters 35 und die thermischen Regenerationen sind seltener erforderlich. Ein weiterer positiver Nebeneffekt ist ein mit der erhöhten NOx-Rohemission typischerweise einhergehender verminderter Kraftstoffverbrauch des Motors 1. Eine Steigerung des NO₂-Angebots und damit des erwünschten CRT-Effekts ist durch Zugabe von Harnstoff bzw. Ammoniak stromauf des Oxidationskatalysators 34 ermöglicht. Hierfür kann eine zusätzliche Zugabeeinheit vorgesehen sein, welche bei Bedarf aktiviert wird.

## Patentansprüche

1. Betriebsverfahren für einen Kraftfahrzeug-Dieselmotor mit einer Abgasreinigungsanlage umfassend einen Oxidationskatalysator (34), einen Partikelfilter (35) und einen SCR-Katalysator, bei welchem das vom Dieselmotor (1) abgegebene Abgas vor einem Durchleiten durch den Partikelfilter (35) und den SCR-Katalysator durch den Oxidationskatalysator (34) geleitet wird,
**dadurch gekennzeichnet, dass**
von Zeit zu Zeit eine Regeneration des Partikelfilters (35) mit einem thermischen Rußabbrand vorgenommen wird, wobei während der Durchführung der Regeneration des Partikelfilters (35) der Dieselmotor (1) mit einem Luft-Kraftstoffverhältnis mit einem Lambdawert (λ) von annähernd 1,0 betrieben wird und dem Abgas nach Austritt aus dem Oxidationskatalysator (34) und vor dem Eintritt in den Partikelfilter (35) Luft zugemischt wird, so dass ein Abbrennen von auf dem Partikelfilter (35) abgelagertem Ruß ermöglicht ist.

2. Verfahren nach Anspruch 1,
**dadurch gekennzeichnet, dass**
ein Oxidationskatalysator (34) mit einer Drei-Wege-Katalysatorbeschichtung eingesetzt wird.

3. Verfahren nach Anspruch 1 oder 2,
**dadurch gekennzeichnet, dass**
während einer Regeneration des Partikelfilters (35) die Zumischung von Luft mit einem derartigen Mengenstrom vorgenommen wird, dass das Abbrennen von auf dem Partikelfilter (35) abgelagertem Ruß mit einer vorgebbaren Geschwindigkeit erfolgt.

4. Verfahren nach einem der Ansprüche 1 bis 3,
**dadurch gekennzeichnet, dass**
außerhalb von Betriebsphasen einer Partikelfilterregeneration der Dieselmotor (1) mit einem für normalen Dieselmotorbetrieb typischen Luftüberschuss betrieben wird und dem Abgas vor Durchleiten durch den SCR-Katalysator Ammoniak oder ein zur Abspaltung von Ammoniak befähigtes Reduktionsmittel zugemischt wird.

5. Verfahren nach einem der Ansprüche 1 bis 4,
**dadurch gekennzeichnet, dass**
das Abgas vor und/oder nach dem Durchleiten durch den Partikelfilter (35) durch den SCR-Katalysator geleitet wird.

6. Verfahren nach einem der Ansprüche 1 bis 5,
**dadurch gekennzeichnet, dass** das Abgas durch einen als Beschichtung des Partikelfilters (35) ausgeführten SCR-Katalysator geleitet wird.

## Claims

1. Method for operating a motor vehicle diesel engine with an exhaust emission control system comprising an oxidising converter (34), a particulate filter (35) and an SCR converter, wherein the exhaust gas emitted by the diesel engine (1) is conducted through the oxidising converter (34) before passing through the particulate filter (35) and the SCR converter,
**characterised in that**
the particulate filter (35) is occasionally regenerated with a thermal particulate burn-off, wherein the diesel engine (1) is, during the regeneration of the particulate filter (35), operated with an air-to-fuel ratio with a lambda value (λ) of approximately 1.0 and air is added to the exhaust gas after it leaves the oxidising converter (34) and before it enters the particulate filter (35), so that a burn-off of particulates accumulated on the particulate filter (35) is facilitated.

2. Method according to claim 1,
**characterised in that**
the oxidising converter (34) is used with a three-way catalyst coating.

3. Method according to claim 1 or 2,
**characterised in that**
during the regeneration of the particulate filter (35), air is added at such a volumetric flow rate that the particulates accumulated on the particulate filter (35) are burned off with a presettable speed.

4. Method according to any of claims 1 to 3,
**characterised in that**
outside any operating phases of particulate filter regeneration, the diesel engine (1) is operated with typical leanness and ammonia or a reducing agent capable of releasing ammonia is added to the exhaust gas before it passes through the SCR converter.

5. Method according to any of claims 1 to 4,
**characterised in that**
the exhaust gas is passed through the SCR converter before and/or after passing through the particulate filter (35).

6. Method according to any of claims 1 to 5,
**characterised in that**
the exhaust gas is passed through an SCR converter designed as a coating of the particulate filter (35).

## Revendications

1. Procédé de fonctionnement d'un moteur diesel de véhicule automobile équipé d'une installation d'épuration de gaz d'échappement comprenant un catalyseur d'oxydation (34), d'un filtre à particules (35) et d'un catalyseur réducteur catalytique sélectif, selon ledit procédé, les gaz d'échappement produits par le moteur diesel (1) sont amenés à travers le catalyseur d'oxydation (34) avant d'être amenés à travers le filtre à particules (35) et le catalyseur réducteur catalytique sélectif, **caractérisé en ce qu'**une régénération du filtre à particules (35) est réalisée de temps en temps au moyen d'une combustion thermique de la suie, pendant ladite régénération du filtre à particules (35), le moteur diesel (1) fonctionne avec un rapport air-carburant présentant une valeur lambda (λ) approximativement égale à 1,0 et de l'air est mélangé aux gaz d'échappement après la sortie du catalyseur d'oxydation (34) et avant l'entrée dans le filtre à particules (35), ce qui permet une élimination par combustion de la suie déposée sur le filtre à particules (35).

2. Procédé selon la revendication 1, **caractérisé en ce qu'**un catalyseur d'oxydation (34) doté d'une enveloppe de catalyseur à trois voies est utilisé.

3. Procédé selon la revendication 1 ou la revendication 2, **caractérisé en ce que** pendant une régénération du filtre à particules (35) le mélange d'air est réalisé, ledit mélange ayant un tel flux massique que l'élimination par combustion de la suie déposée sur le filtre à particules (35) s'effectue à une vitesse prédéfinie.

4. Procédé selon l'une quelconque des revendications 1 à 3, **caractérisé en ce qu'**en dehors des phases de fonctionnement d'une régénération de filtre à particules le moteur diesel (1) fonctionne au moyen d'un excédant d'air typique pour un fonctionnement normal de moteur diesel et de l'ammoniac ou un agent de réduction capable de séparer l'ammoniac est mélangé aux gaz d'échappement avant qu'ils ne soient amenés à travers le catalyseur réducteur catalytique sélectif.

5. Procédé selon l'une quelconque des revendications 1 à 4, **caractérisé en ce que** les gaz d'échappement sont amenés à travers le catalyseur réducteur catalytique sélectif avant et/ou après qu'ils ont été amenés à travers le filtre à particules (35).

6. Procédé selon l'une quelconque des revendications 1 à 5, **caractérisé en ce que** les gaz d'échappement sont amenés à travers un catalyseur réducteur catalytique sélection conçu comme enveloppe du filtre à particules (35).
